# EUROPÄISCHE PATENTSCHRIFT

(11) **EP 2 794 338 B1**
(45) Veröffentlichungstag und Bekanntmachung des Hinweises auf die Patenterteilung: **24.02.2016**
(21) Anmeldenummer: 13708749.0
(22) Anmeldetag: 28.02.2013
(51) Int. Cl.: B60L 3/00, B60L 7/16, B60L 7/24

(54) **SCHIENENFAHRZEUGBREMSVORRICHTUNG UND VERFAHREN ZUM BREMSEN EINES SCHIENENFAHRZEUGS**
RAIL VEHICLE BRAKING DEVICE AND METHOD FOR BRAKING A RAIL VEHICLE
DISPOSITIF DE FREINAGE DE VÉHICULE FERROVIAIRE ET PROCÉDÉ POUR FREINER UN VÉHICULE FERROVIAIRE

(30) Priorität: 29.02.2012 DE 102012203132
(43) Veröffentlichungstag der Anmeldung: 29.10.2014
(73) Patentinhaber: Siemens Aktiengesellschaft, 80333 München (DE)
(72) Erfinder: SCHWINN, Jean-Pascal, 81539 München (DE); STÜTZLE, Thorsten, 90480 Nürnberg (DE); FÖRSTER, Till, 90763 Fürth (DE); HASSLER, Stefan, 91281 Kirchenthumbach (DE); HEILMANN, Reiner, 85658 Egmating (DE); WIESAND, Manfred, 90559 Burgthann (DE)
(86) Internationale Anmeldenummer: PCT/EP2013/054057
(87) Internationale Veröffentlichungsnummer: WO 2013/127934

(56) Entgegenhaltungen:
- EP-A2- 1 195 286
- EP-A2- 2 033 835
- US-A1- 2012 000 739

## Beschreibung

Die Erfindung betrifft eine Schienenfahrzeugbremsvorrichtung mit zumindest einer elektrodynamischen Bremse, die eine Antriebseinheit umfasst, welche zumindest einen Antriebsmotor und eine Leistungsversorgungseinheit zum Versorgen des Antriebsmotors in einem Traktionsmodus der Antriebseinheit aufweist.

Es sind Schienenfahrzeuge bekannt, bei welchen eine Bremskraft durch elektrische Motoren erzeugt wird. Die während der Bremsung von den Motoren generatorisch in elektrische Energie umgewandelte Bewegungsenergie des Fahrzeugs wird z.B. über einen Bremswiderstand in Wärme umgewandelt oder in das Bahnversorgungsnetz oder auch in einen Mobilspeicher zurückgeführt.

Neben der elektrodynamischen, generatorischen Bremse verfügen die Schienenfahrzeuge üblicherweise weiterhin über eine vollwertige Reibungsbremse, bei der die Bremswirkung auf pneumatischem, hydraulischem und/oder mechanischem Weg erreicht wird.

Bei Bremssystemen ist es üblich, zwischen den Bremsarten "Betriebsbremsung" und "Notbremsung" (auch "Schnellbremsung bzw. "Gefahrenbremsung" genannt) zu unterscheiden. Während die Betriebsbremsung der Geschwindigkeitsreduzierung des Zuges - auch bis in den Stillstand - dient, wird von der Notbremsung über diese Forderung hinaus restriktiver verlangt, die größtmögliche Sicherheit der Fahrgäste, des Personals und Dritter zu gewährleisten. Üblicherweise wird für die Betriebsbremsung die elektrodynamische Bremse bevorzugt eingesetzt.

Bei einer Notbremsung wird die generatorische Bremse in der Regel nicht ohne gleichzeitige Betätigung der Reibungsbremse eingesetzt. Der Grund hierfür liegt in der bisher geringeren Ausfallsicherheit der elektrodynamischen Bremse gegenüber der elektropneumatischen oder elektrohydraulischen Reibungsbremse, sodass die größtmögliche Bremssicherheit bisher nur über die Reibungsbremsen erreicht werden kann.

Dies bedeutet allerdings im Extremfall, der bei Metrozügen üblicherweise vorliegt, dass ein Motorwagen eines Zuges mit der Reibungsbremse und der elektrodynamischen Bremse prinzipiell über zwei vollwertige Bremseinheiten verfügt, wobei jede für sich genommen innerhalb eines weiten Fahrgeschwindigkeitsbereichs ein genügend großes Bremsmoment erzeugen kann um die spezifizierten Bremswege einzuhalten, sodass in dieser Hinsicht die eine Bremseinheit anstelle der anderen genutzt werden könnte.

Die beiden Bremseinheiten weisen unterschiedliche Vorteile auf. Während die Reibungsbremse eine größere Sicherheit im Falle einer Notbremsung gewährleistet, weist die generatorische Bremse ökonomische Vorteile auf. So tritt beispielsweise kein Verschleiß bei Bremsbelägen und Bremsscheiben auf. Außerdem ist eine teilweise Nutzung der transformierten kinetischen Energie möglich.

Der Erfindung liegt die Aufgabe zugrunde, die Sicherheit der elektrodynamischen Bremse zu erhöhen.

Hierzu wird vorgeschlagen, dass die Schienenfahrzeugbremsvorrichtung zumindest zwei Bremssteuereinheiten, wobei in einem ersten Bremsmodus eine erste Bremssteuereinheit in einem aktiven Zustand die Leistungsversorgungseinheit zur Bereitstellung einer Bremswirkung steuert, eine erste Bremswirkungsüberwachungseinheit und eine Schalteinheit aufweist, die dazu dient, abhängig von einer Bremswirkungskenngröße im ersten Bremsmodus in einen zweiten Bremsmodus umzuschalten, in welchem die zweite Bremssteuereinheit in einem aktiven Zustand die Leistungsversorgungseinheit zur Bereitstellung einer Bremswirkung steuert. Hierdurch kann eine Schienenfahrzeugbremsvorrichtung bereit gestellt werden, die eine hohe Sicherheit im Hinblick auf einen fehlerhaften Betrieb der elektrodynamischen Bremse aufweist, indem eine vorteilhafte Redundanz in der Steuerung der Antriebseinheit in einem Bremsmodus derselben bereit gestellt wird. Mit der vorgeschlagenen Schienenfahrzeugbremsvorrichtung kann die Sicherheit der elektrodynamischen Bremse die einer herkömmlichen Reibungsbremse erreichen.

Die Leistungsversorgungseinheit weist vorzugsweise steuerbare elektronische Elemente auf, die im Traktionsmodus gemäß einer Steuerungsstrategie - im Hinblick auf ein bestimmtes, zu erreichendes Antriebsmoment - zur Versorgung des Antriebsmotors mit einer entsprechenden elektrischen Leistung gesteuert werden. Die steuerbaren Elemente sind insbesondere als Schalt- oder Ventilelemente ausgebildet, die mittels Schaltvorgängen entsprechend einer Schaltstrategie einen Leistungsstrom mit einer angepassten Spannung, Frequenz und/oder Stromstärke erzeugen, mit welchem der Antriebsmotor angetrieben wird. Insbesondere kann die Leistungsversorgungseinheit als Wechselrichter ausgebildet sein, welcher im Traktionsmodus die notwendige Energie aus einem Zwischenkreis, beispielsweise einem Gleichspannungszwischenkreis bezieht.

In einem Bremsmodus der elektrodynamischen Bremse werden die Leistungsversorgungseinheit bzw. deren steuerbare Elemente zweckmäßigerweise mittels der zugeordneten Bremssteuereinheit derart gesteuert, dass mittels des mit der Leistungsversorgungseinheit in Wirkverbindung stehenden Antriebsmotors ein auf eine Achse des Schienenfahrzeugs übertragbares Bremsmoment erzeugt wird.

Unter einer "Bremswirkungskenngröße" soll insbesondere eine Kenngröße verstanden werden, mittels welcher zumindest eine Information über eine Bremswirkung der elektrodynamischen Bremse gewonnen werden kann. Diese Bremswirkung kann eine mittels der elektrodynamischen Bremse erzielte Bremswirkung oder eine durch einen Betrieb einer Bremssteuereinheit erzielbare Bremswirkung sein. In der erstgenannten Alternative kann die Bremswirkungsüberwachungseinheit eine Sensoreinheit umfassen, mittels welcher zumindest eine auf das Schienenfahrzeug bezogene Betriebskenngröße, wie z.B. eine momentane Geschwindigkeitskenngröße, eine momentane Beschleunigungskenngröße, eine Bremskraftkenngröße usw. erfassbar ist. In der letztgenannten Alternative kann die Bremswirkungsüberwachungseinheit durch eine aktive Bremssteuereinheit erzeugte Steuersignale zur Steuerung der Leistungsversorgungseinheit auswerten, um eine mit den Steuersignalen erzielbare Bremswirkung zu ermitteln. Unter einer "Bremswirkung" kann insbesondere eine Bremskraft oder ein Bremsmoment verstanden werden, welches auf einen Schienenfahrzeugradsatz übertragbar ist.

Ein weiterer Sicherheitsgewinn kann dadurch erreicht werden, wenn eine Sensoreinheit, die zur Erfassung der Bremswirkungskenngröße vorgesehen ist und von mehreren unabhängigen Systemen genutzt wird, rückwirkungsfrei verwendet wird. Dies kann z.B. dadurch erreicht werden, dass Leitungen zwischen der Sensoreinheit und den unterschiedlichen Systemen galvanisch getrennt werden, um die Systeme voneinander unabhängig zu halten.

Im zweiten Bremsmodus kann die erste Bremssteuereinheit weiter betrieben werden, indem die zweite Bremssteuereinheit mittels der Schalteinheit zugeschaltet wird. Hierbei soll mittels der zweiten Bremssteuereinheit eine fehlende Bremswirkung ausgeglichen werden. Es wird in einer bevorzugten Ausführung der Erfindung jedoch vorgeschlagen, dass sich die erste Bremssteuereinheit im zweiten Bremsmodus in einem inaktiven Zustand befindet. Hierdurch können unerwünschte Auswirkungen eines fehlerhaften Betriebs der ersten Bremssteuereinheit weitestgehend vermieden werden. Die Schalteinheit bewirkt hierbei zweckmäßigerweise ein Umschalten zwischen beiden Bremssteuereinheiten.

Eine erhöhte Sicherheit im Betrieb der elektrodynamischen Bremse kann außerdem erreicht werden, wenn die erste Bremswirkungsüberwachungseinheit zum Überwachen der ersten Bremssteuereinheit dient, und dass zumindest eine zweite Bremswirkungsüberwachungseinheit zum Überwachen zumindest der zweiten Bremssteuereinheit vorgesehen ist.

In diesem Zusammenhang wird vorgeschlagen, dass die Schienenfahrzeugbremsvorrichtung eine weitere Bremseinrichtung und eine Schaltvorrichtung aufweist, wobei abhängig von einer Bremswirkungskenngröße im zweiten Bremsmodus diese weitere Bremseinrichtung mittels der Schaltvorrichtung betätigt wird. Hierdurch kann bei einem fehlerhaften Betrieb der zweiten Bremssteuereinheit eine zusätzliche Bremswirkung mittels der weiteren Bremseinrichtung bereit gestellt werden.

In einer konstruktiv einfachen Ausführung wird vorgeschlagen, dass diese Bremseinrichtung als Feststellbremse ausgebildet ist.

Es ist außerdem möglich, alternative Bremsen als Ausprägung der weiteren Bremseinrichtung vorzusehen, die insbesondere eine höhere Leistung aufweisen als eine Feststellbremse. So können beispielsweise zur Bereitstellung einer ausreichenden Bremswirkung Bremsen eingesetzt werden, die vom generatorischen Prinzip einer elektrodynamischen Bremse abweichen und über Druckerhöhung in pneumatischen oder hydraulischen Bremszylindern ihre Bremswirkung entfalten. Außerdem kann als weitere Bremseinrichtung eine Magnetschienenbremse eingesetzt werden, welche durch pneumatisches, hydraulisches und/oder mechanisches Betätigen eines Aktuators in Verbindung mit einem durch einen Strom erzeugten magnetischen Feld betrieben wird. Des Weiteren ist ein auf dem Prinzip des Wirbelstroms basierendes Bremssystem möglich. Ein Zuschalten oder Erhöhen von Bremswirkungen mittels zumindest einer weiteren Bremseinrichtung kann solange erfolgen, bis sämtliche verfügbare Bremsen vollständig zugeschaltet sind.

In einer weiteren Ausführungsform der Erfindung wird vorgeschlagen, dass sich die Bremssteuereinheiten bezüglich ihrer konstruktiven und/oder algorithmischen Ausführung voneinander unterscheiden. Durch den Einsatz unterschiedlicher Technologien für die Bremssteuereinheiten kann eine besonders hohe Sicherheit erreicht werden, da ein System mit einer diversitären Redundanz geschaffen werden kann. Besonders vorteilhaft kann die Ausbreitung eines für eine bestimmte Technologie spezifischen möglichen systematischen Fehlers von einer ersten Bremssteuereinheit auf eine zweite Bremssteuereinheit bzw. eine Kette weiterer Bremssteuereinheiten vermieden werden. Der Begriff "konstruktiv" bezieht sich vorzugsweise auf eine für die Bremssteuereinheit eingesetzte Hardware und der Begriff "algorithmisch" bezieht sich vorzugsweise auf eine Implementierung zumindest einer Steuerfunktion einer Bremssteuereinheit mittels einer Software. Die Unterschiede in der konstruktiven Ausführung und/oder in der algorithmischen Ausführung betreffen vorzugsweise Funktionen der Bremssteuereinheiten, die für die Ansteuerung der Leistungsversorgungseinheit bzw. von deren steuerbaren Elementen relevant sind. In dieser vorgeschlagenen Ausführungsform können die Bremssteuereinheiten - bei einer Ausführung der Leistungsversorgungseinheit mit Schalt- oder Ventilelementen - die Schalt- oder Ventilelemente gemäß zweier unterschiedlicher Schaltstrategien steuern. Hierbei ist die Schaltstrategie der ersten Bremssteuereinheit unterschiedlich von der Schaltstrategie der zweiten Bremssteuereinheit.

Bezüglich der algorithmischen Ausführung wird in diesem Zusammenhang vorgeschlagen, dass eine Software für die Ausführung zumindest einer Steuerfunktion in der zweiten Bremssteuereinheit unterschiedlich implementiert ist als in der ersten Bremssteuereinheit. Unter einer "unterschiedlichen Implementierung" kann insbesondere verstanden werden, dass sich die Software der ersten Bremssteuereinheit von der Software der zweiten Bremssteuereinheit hinsichtlich des Algorithmus und/oder des Programmiercodes voneinander unterscheidet. Es ist hierbei vorteilhaft, wenn die Software der ersten und der zweiten Bremssteuereinheiten mittels unterschiedlicher Entwurfswerkzeuge erstellt wird. Weiterhin ist vorteilhaft, wenn die Software der Bremssteuereinheiten von unterschiedlichen Personen entwickelt wird.

Bezüglich der konstruktiven Ausführung wird außerdem vorgeschlagen, dass eine der Bremssteuereinheiten als eine reine hardwaretechnische Steuerung ausgebildet ist. Hierbei soll insbesondere verstanden werden, dass die für die Ansteuerung der Leistungsversorgungseinheit relevante, hardwaretechnische Steuerung ohne Softwareeinsatz erfolgt.

Um die Zuverlässigkeit der elektrodynamischen Bremse zu erhöhen wird in einer weiteren Ausführung der Erfindung vorgeschlagen, dass die Schienenfahrzeugbremsvorrichtung einen Testmodus aufweist, in welchem die Schalteinheit getestet wird.

Ferner wird vorgeschlagen, dass die Schienenfahrzeugbremsvorrichtung eine Schnittstelle zu einer Fahrzeugnotbremsleitung aufweist, mittels welcher eine Notbremsung mittels der elektrodynamischen Bremse auslösbar ist. Mit dem Sicherheitsniveau, welches durch die vorgeschlagene Ausbildung der Schienenfahrzeugbremsvorrichtung, insbesondere durch die hohe Redundanz der Steuereinheiten der elektrodynamischen Bremse erreichbar ist, kann ein Schienenfahrzeug mit einer Notbremseeinrichtung bereitgestellt werden, wobei eine Notbremsung ausschließlich mittels der elektrodynamischen Bremse mit einem ausreichenden Sicherheitsniveau erfolgen kann. Hierdurch kann auf eine vollwertige, zusätzliche Reibungsbremse vorteilhaft verzichtet werden. Für geringere Geschwindigkeiten kann als Reibungsbremse lediglich eine Feststellbremse, beispielsweise in Form einer Federspeicherbremse, erhalten bleiben, die mittels eines Federspeichers ein Wegrollen des abgestellten Fahrzeugs am Hang verhindert. Damit kann eine deutliche Verringerung der Stückkosten von Bremskomponenten und des Gewichts des Schienenfahrzeugs erzielt werden.

In einer vorteilhaften Weiterbildung der Erfindung wird vorgeschlagen, dass die Schienenfahrzeugbremsvorrichtung zumindest eine zweite elektrodynamische Bremse umfasst, die eine Antriebseinheit, welche zumindest einen Antriebsmotor und eine Leistungsversorgungseinheit zum Versorgen des Antriebsmotors in einem Traktionsmodus der Antriebseinheit aufweist, und zumindest eine Bremsregelungseinheit umfasst, welche die jeweilige Leistungsversorgungseinheit und zumindest eine Bremssteuereinheit aufweist, die in einem ersten Bremsmodus die jeweilige Leistungsversorgungseinheit zur Bereitstellung einer Bremswirkung steuert, wobei die Bremssteuereinheiten zumindest Bestandteile einer der zweiten Bremse zugeordneten Bremsüberwachungseinrichtung sind. Hierdurch kann eine Bremsüberwachungseinrichtung für die zweite Bremse bereitgestellt werden, die von der Bremsregelungseinheit der zweiten Bremse unabhängig ist. Dabei werden in der Bremsüberwachungseinrichtung implementierten Auswerte- und Entscheidungsprozesse durch die Bremssteuereinheiten der anderen Bremse ausgeführt, sodass diese Prozesse von Prozessen der Bremsregelungseinheit der zweiten Bremse unabhängig sind. Durch die Unabhängigkeit der Bremsüberwachungseinrichtung der zweiten Bremse von deren Bremsregelungseinheit kann eine vorteilhafte Trennung der Steuerfunktionen und der Überwachungsfunktionen der zweiten Bremse erreicht werden, wobei eine hohe Sicherheit bezüglich einer Verbreitung von systematischen Fehlern von einer Steuer- bzw. Regelungseinheit auf eine Überwachungseinheit erreicht werden kann. Die Bremsüberwachungseinrichtung für die zweite Bremse umfasst ferner zumindest zwei Überwachungsvorrichtungen in der Form der Bremssteuereinheiten, sodass eine vorteilhafterweise diversitäre Redundanz der Bremsüberwachungseinrichtung erreicht werden kann.

Des Weiteren wird vorgeschlagen, dass zumindest die Bremsregelungseinheit der zweiten Bremse eine der ersten Bremse zugeordnete Bremsüberwachungseinrichtung bildet. Hierdurch kann eine vorteilhafte gegenseitige, insbesondere überkreuzte Überwachung der elektrodynamischen Bremsen erreicht werden. Es wird ein Ausführungsbeispiel der Erfindung anhand der Zeichnungen erläutert. Es zeigen:
- Figur 1:: ein Schienenfahrzeug mit Antriebsachsen und diesen zugeordneten Antriebseinheiten,
- Figur 2:: eine Steuerungsschaltung zum Steuern einer Antriebseinheit in einem Bremsmodus, mit zwei unterschiedlichen Bremssteuereinheiten und
- Figur 3:: die Steuerschaltung aus Figur 2 und eine weitere Steuerschaltung, die mit einer Überwachungsfunktion ausgestattet ist.

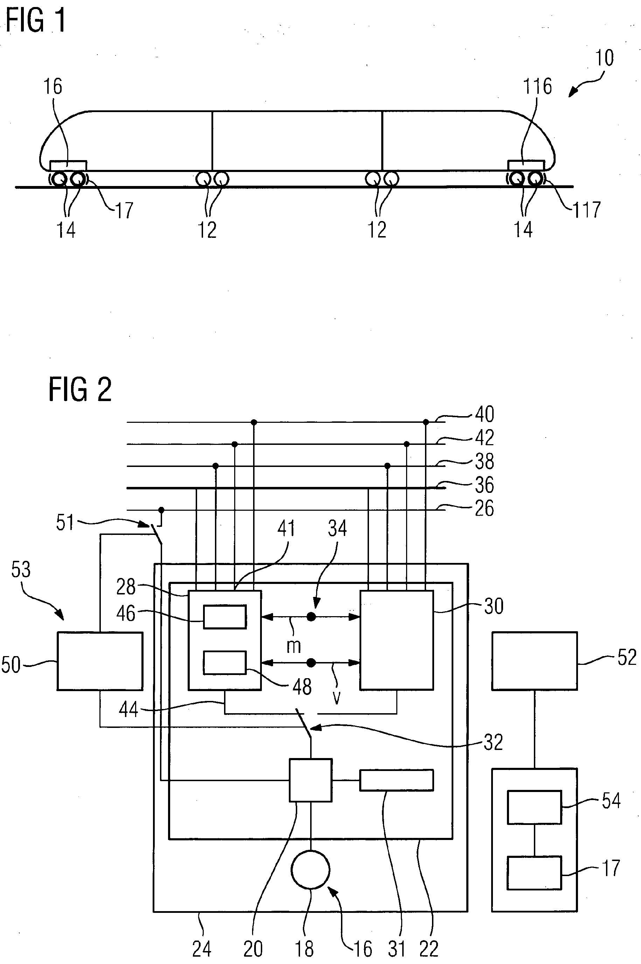

Figur 1 zeigt ein als Triebfahrzeug ausgebildetes Schienenfahrzeug 10 in einer stark schematisierten Seitenansicht. Es weist Laufachsen 12 und Antriebsachsen 14 auf, die in einem Traktionsmodus mittels Antriebseinheiten 16, 116 angetrieben werden. Ein Bremsvorgang des Schienenfahrzeugs 10 erfolgt mittels der Antriebseinheiten 16, 116, die dabei jeweils die Funktion einer elektrodynamischen Bremse haben. Für Bremsvorgänge bei geringen Geschwindigkeiten ist jeweils eine weitere Bremseinrichtung 17, 117 vorgesehen, die als eine in der Form einer Federspeicherbremse ausgeführte, in der Figur schematisch dargestellte Feststellbremse ausgebildet ist.

Die Steuerung der Antriebseinheit 16 als Bestandteil einer elektrodynamischen Bremse wird anhand der Figur 2 näher erläutert. Die Antriebseinheit 16 weist zumindest einen Antriebsmotor 18 auf, der als Drehstrommaschine ausgebildet sein kann. Zur Versorgung des Antriebsmotors 18 mit elektrischer Leistung umfasst die Antriebseinheit 16 ferner eine mit dem Antriebsmotor 18 in Wirkverbindung stehende Leistungsversorgungseinheit 20. In einer nicht gezeigten Ausführung kann die Antriebseinheit 16 mehrere Antriebsmotoren aufweisen, die von der gleichen Leistungsversorgungseinheit 20 versorgt werden. Die Leistungsversorgungseinheit 20 ist aus dem Stand der Technik bekannt und weist einen nicht näher dargestellten Wechselrichter auf, welcher in einem Traktionsmodus der Antriebseinheit 16 durch die Ansteuerung elektronischer Schaltelemente - auch "Ventile" genannt - ausgehend von einem Gleichspannungszwischenkreis einen in Spannung und Frequenz variablen Strom gemäß der zu bereitstellenden Leistung für den Antriebsmotor 18 erzeugt. Die im Gleichspannungszwischenkreis verfügbare Energie wird aus einer Hochspannungsnetzversorgung 26 bezogen, die über weitere, nicht dargestellte elektrische Wandlungseinrichtungen, wie insbesondere einen Transformator oder einen Spannungswandler, einen Gleichrichter usw. mit einer Bahnnetzversorgung in Wirkverbindung steht. Im Traktionsmodus der Antriebseinheit 16 werden die Schaltelemente des Wechselrichters gemäß einer Schaltstrategie gesteuert, um über den Antriebsmotor 18 ein Antriebsmoment auf die zugeordneten Antriebsachsen 14 zu erzeugen.

Der Antriebsmotor 18 bildet zusammen mit einer Bremsregelungseinheit 22 eine elektrodynamische Bremse 24. Die Bremsregelungseinheit 22 umfasst neben der Leistungsversorgungseinheit 20 zwei Bremssteuereinheiten 28 und 30, die jeweils dazu vorgesehen sind, in einem aktiven Zustand die Leistungsversorgungseinheit 20 für einen Bremsvorgang der elektrodynamischen Bremse 24 zu steuern. Die Bremssteuereinheiten 28, 30 sind jeweils dazu vorgesehen, in einem Bremsmodus der Antriebseinheit 16 die Schaltelemente des Wechselrichters der Leistungsversorgungseinheit 20 gemäß einer Schaltstrategie derart zu steuern, dass über den Antriebsmotor 18 ein Bremsmoment auf die zugeordnete Antriebsachse 14 ausgeübt wird. Bei einem Bremsvorgang mittels der elektrodynamischen Bremse 24 wirkt der Antriebsmotor 18 als Generator, wobei die im Bremsvorgang in elektrischen Strom umgewandelte Energie mittels eines Bremswiderstands 31 in Wärme umgewandelt wird. Alternativ oder zusätzlich kann die Energie in die Hochspannungsnetzversorgung 26 zurückgespeist, auf dem Fahrzeug verwendet oder in einen Mobilspeicher eingespeichert werden.

Die erste Bremssteuereinheit 28 steht mit der Leistungsversorgungseinheit 20 über eine Schalteinheit 32 in Wirkverbindung, deren Funktion weiter unten erläutert wird. Neben einer Schnittstelle zur Leistungsversorgungseinheit 20 weist die Bremssteuereinheit 28 weitere Schnittstellen auf, durch welche sie mit einer Sensoreinheit 34 in Wirkverbindung steht. Die Sensoreinheit 34 dient dazu, eine Geschwindigkeitskenngröße v und eine Massenkenngröße m zu erfassen, die Eingangssignale für die Erzeugung von Steuersignalen durch die Bremssteuereinheit 28 darstellen. Die Bremssteuereinheit 28 steht ferner über weitere Schnittstellen in Wirkverbindung mit der Schienenfahrzeugleittechnik, indem sie mit einem Datenbus 36 des Schienenfahrzeugs 10 verbunden ist, und mit der Schienenfahrzeughauptluftleitung 38. Über diese weiteren Schnittstellen können weitere Eingangsparameter für die Bremssteuereinheit 28 zur Verfügung gestellt werden, wie insbesondere eine Kenngröße, die im Falle einer Betriebsbremsung eine durch den Fahrzeugführer oder durch eine automatische Fahrzeugssteuerung eingestellte Bremswirkung darstellt. Die Bremssteuereinheit 28 ist über eine Bordnetzversorgung 40 mit elektrischer Energie versorgt und steht ferner über eine Schnittstelle 41 mit einer Fahrzeugsnotbremseleitung 42 in Wirkverbindung, über welche eine Notbremsung des Schienenfahrzeugs 10 eingeleitet werden kann.

Auf der Basis der oben genannten Eingangsparameter erzeugt die Bremssteuereinheit 28 in einem ersten Bremsmodus, in welchem sie sich in einem aktiven Zustand befindet, Steuersignale 44, die die Leistungsversorgungseinheit 20 entsprechend einer bestimmten, zu erzielenden Bremswirkung, insbesondere entsprechend einem bestimmten, zu erzielenden Bremsmoment steuert. Hierzu weist die Betriebssteuereinheit 28 zumindest eine Recheneinheit 46 und eine Speichereinheit 48 auf, in welcher eine Software gespeichert ist. In dieser Software ist insbesondere die Bremsmodusschaltstrategie für die Schaltelemente des Wechselrichters programmiert.

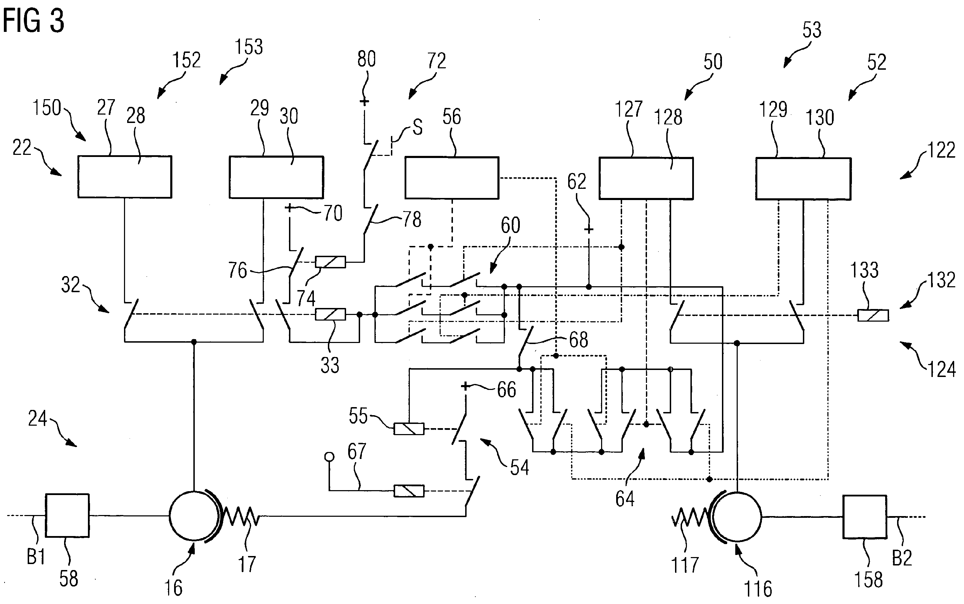

Der Bremssteuereinheit 28 ist eine erste Bremswirkungsüberwachungseinheit 50 einer ersten Bremsüberwachungseinrichtung 53 zugeordnet, die dazu vorgesehen ist, die mittels der elektrodynamischen Bremse 24 erzielte oder erzielbare Bremswirkung zu überwachen. Hierzu wird eine Bremswirkungskenngröße, insbesondere eine Bremsmomentkenngröße herangezogen und mit einem Sollwert verglichen. Die Bremswirkungskenngröße kann z.B. mittels eines Beschleunigungssensors erfasst werden und/oder mittels einer Auswertung der Geschwindigkeitskenngröße v ermittelt werden. Alternativ oder zusätzlich kann die Bremswirkungskenngröße mittels einer Überwachung der durch die Bremssteuereinheit 28 erzeugten Steuersignale 44 ermittelt werden. Eine beispielhafte Erfassung der Bremswirkungskenngröße, die mit dem Bezugszeichen B1 bezeichnet ist, ist in Figur 3 durch eine Sensoreinheit 58 bzw. 158 schematisch dargestellt.

Die Bremsregelungseinheit 22 umfasst - wie oben bereits erwähnt - eine zweite Bremssteuereinheit 30. Diese ist dazu vorgesehen, zumindest die oben, für die erste Bremssteuereinheit 28 beschriebene Steuerungsfunktion zum Steuern der Leistungsversorgungseinheit 20 in einem zweiten Bremsmodus der Antriebseinheit 16 auszuführen. Sie dient insbesondere dazu, die Steuerung der Leistungsversorgungseinheit 20 bei einem fehlerhaften Betrieb der ersten Bremssteuereinheit 28 zu übernehmen.

Wird mittels der ersten Bremswirkungsüberwachungseinheit 50 erkannt, dass die durch die elektrodynamische Bremse 24 erzeugte bzw. erzielbare Bremswirkung nicht ausreicht, wird die Bremssteuereinheit 28 als fehlerhaft betrachtet und es wird als Rückfallmaßnahme mittels der Schalteinheit 32 in einen zweiten Bremsmodus der elektrodynamischen Bremse 24 umgeschaltet, in welchem die zweite Bremssteuereinheit 30 in ihrem aktiven Zustand die Leistungsversorgungseinheit 20 zur Bereitstellung einer Bremswirkung steuert. In diesem zweiten Bremsmodus wird die erste, fehlerhafte Bremssteuereinheit 28 in einen inaktiven Zustand geschaltet.

Um ein Antreiben während des Betriebs der zweiten Bremssteuereinheit 30 im zweiten Bremsmodus zu verhindern ist vorteilhaft, wenn mit der Umschaltung durch die Schalteinheit 32 auch eine Trennung von der Hochspannungsnetzversorgung 26 stattfindet. Dies erfolgt mittels eines Netztrennschalters 51.

Der zweiten Bremssteuereinheit 30 ist eine zweite Bremswirkungsüberwachungseinheit 52 der Bremsüberwachungseinrichtung 53 zugeordnet. Die Bremswirkungsüberwachungseinheiten 50, 52 können von physikalisch voneinander getrennten Einheiten gebildet sein oder sie können zumindest teilweise von einer gemeinsamen Struktur gebildet sein. Insbesondere können die Bremswirkungsüberwachungseinheiten 50, 52 vollständig durch die gleiche Struktur gebildet sein. Die zweite Bremswirkungsüberwachungseinheit 52 ist dazu vorgesehen, die mittels der elektrodynamischen Bremse 24 in deren zweitem Bremsmodus mit der zweiten Bremssteuereinheit 30 erzielte bzw. erzielbare Bremswirkung zu überwachen. Hierzu wird - wie oben bereits beschrieben - eine Bremswirkungskenngröße, insbesondere eine Bremsmomentkenngröße, erfasst bzw. ermittelt und mit einem Sollwert verglichen. Diese Bremswirkungskenngröße kann insbesondere der Bremswirkungskenngröße B1 entsprechen.

Wird mittels der zweiten Bremswirkungsüberwachungseinheit 52 erkannt, dass die durch die elektrodynamischen Bremse 24 erzeugte bzw. erzielbare Bremswirkung nicht ausreicht, wird die Bremssteuereinheit 30 als fehlerhaft betrachtet und es wird als Rückfallmaßnahme mittels einer durch die zweite Bremswirkungsüberwachungseinheit 52 gesteuerten Schaltvorrichtung 54 die weitere Bremseinrichtung 17 getätigt.

Die Bremssteuereinheiten 28, 30 basieren auf unterschiedlichen Technologien. Unter einer Technologie wird die konstruktive - oder hardwaretechnische - und/oder die algorithmische - oder softwaretechnische - Ausführung erfasst. In einer beispielhaften Konfiguration kann die erste Bremssteuereinheit 28 in der Form eines Signalprozessors (auch "SIP" genannt) ausgebildet sein, wobei die algorithmische Implementierung einer feldorientierten Regelung entsprechen kann. Die zweite Bremssteuereinheit 30 kann als Field Programmable Gate Array (FPGA) oder "im Feld programmierbare Gatter-Anordnung" ausgebildet sein, wobei die algorithmische Implementierung einer schaltorientierten Regelung entsprechen kann.

Gemäß einer alternativen Ausführung ist die zweite Bremssteuereinheit 30 derart ausgeführt, dass die Ansteuerung der Leistungsversorgungseinheit 20 ausschließlich durch eine mittels Hardware realisierte Funktionalität - ohne Softwareeinsatz - erfolgt, während die erste Bremssteuereinheit 28 auf einer hardwaretechnischen und softwaretechnischen Implementierung der Steuerfunktionen basiert.

Basieren beide Bremssteuereinheiten 28, 30 auf einer softwaretechnischen Umsetzung im Hinblick auf zumindest eine Steuerfunktion, sind die entsprechenden Softwares in den Bremssteuereinheiten 28, 30 unterschiedlich implementiert. Hierbei unterscheiden sich insbesondere die zum Ausführen der Steuerfunktion vorgesehenen Programmiercodes, indem die Codes z.B. durch verschiedene Personen und/oder verschiedenen Werkzeuge erstellt werden.

Durch die unterschiedlichen Ausführungen der Bremssteuereinheiten 28, 30 werden die Schaltelemente des Wechselrichters der Leistungsversorgungseinheit 20 von der ersten Bremssteuereinheit 28 gemäß einer ersten Schaltstrategie und von der zweiten Bremssteuereinheit 30 gemäß einer zweiten, von der ersten Schaltstrategie unterschiedlichen Schaltstrategie gesteuert.

Damit das Umschalten von einer Bremssteuereinheit zur anderen zuverlässig erfolgt, wird die der Antriebseinheit 16 zugeordnete Schalteinheit 32 in regelmäßigen und ausreichend kurzen zeitlichen Abständen auf ihre Funktionalität hin untersucht. Beispielsweise wird bei Stillstand des Schienenfahrzeugs 10, z.B. während des Aufrüstens oder der Bremsprobe, die Ansteuerung der Schaltelemente der Wechselrichter nach einem bestimmten Testmuster durch eine der Bremssteuereinheiten 28, 30 erzeugt. Es ist hierzu zumindest eine Sensoreinheit vorgesehen, die beispielweise einen Phasenstromwandler und/oder einen Zwischenkreisspannungswandler aufweist und welche eine Auswirkung der Ansteuerung erfasst. Nach Durchführung des Tests mit der ersten Bremssteuereinheit 28 wird mittels der Schalteinheit 32 die zweite Bremssteuereinheit 30 in ihren aktiven Zustand geschaltet und der Test wird - vorzugsweise mit einem anderen Testmuster - wiederholt. Wenn eine zu erwartende Umsetzung des jeweiligen Testmusters erkannt wird, gilt die Schalteinheit 32 als fehlerfrei.

Die obige Beschreibung findet auch in Bezug auf die Antriebseinheit 116 Anwendung, welche Bestandteil einer zweiten elektrodynamischen Bremse 124 des Schienenfahrzeugs 10 ist. Die Leistungsversorgungseinheit der Antriebseinheit 116 bildet mit Bremssteuereinheiten 128, 130 eine Bremsregelungseinheit 122, wie in Figur 3 dargestellt. Die Bremsregelungseinheiten 22, 122 des Schienenfahrzeugs 10, jeweils mit ihren Bremssteuereinheiten und ihrer Leistungsversorgungseinheit, sind dahingehend ausgelegt, dass sie im Zusammenwirken eine Notbremsung mittels der ihnen zugeordneten Antriebsmotoren 18 an den Antriebsachsen 14 des Schienenfahrzeugs 10 bewirken können. Anders formuliert sind die Bremsregelungseinheiten 22, 122 dazu ausgelegt, im Zusammenwirken ein für die Durchführung einer Notbremsung notwendiges Bremsmoment mindestens an den Antriebsachsen 14 zu erzeugen.

Eine beispielhafte Implementierung der Bremsüberwachungseinrichtung 53 mit deren Bremswirkungsüberwachungseinheiten 50, 52 wird nun anhand der Figur 3 beschrieben.

Figur 3 zeigt auf der linken Seite die Antriebseinheit 16, welche wie oben beschrieben zumindest den Antriebsmotor 18 und die Leistungsversorgungseinheit 20 umfasst (siehe Figur 2). Es sind außerdem die Bremssteuereinheiten 28, 30 dargestellt, welche zusammen mit der Leistungsversorgungseinheit 20 die Bremsregelungseinheit 22 bilden. Die Bremsregelungseinheit 22 bildet zusammen mit dem Antriebsmotor 18 die elektrodynamische Bremse 24, die im Folgenden als "erste elektrodynamische Bremse 24" bezeichnet wird.

Die Bremsregelungseinheit 22 weist die Schalteinheit 32 auf, welche zur Durchführung einer Rückfallmaßnahme der ersten Bremse 24 dazu vorgesehen ist, zwischen dem ersten Bremsmodus der Bremsregelungseinheit 22, in welchem die erste Bremssteuereinheit 28 die Leistungsversorgungseinheit 20 zur Bereitstellung einer Bremswirkung steuert, und einem zweiten Bremsmodus der Bremsregelungseinheit 22 umzuschalten, in welchem die zweite Bremssteuereinheit 30 die Leistungsversorgungseinheit 20 zur Bereitstellung einer Bremswirkung steuert. In Figur 3 ist ein Aktuator 33 zur Betätigung der Schalteinheit 32 dargestellt.

Das Schienenfahrzeug 10 weist, wie auch in Figur 1 dargestellt, die weitere Antriebseinheit 116 auf. Die Antriebseinheit 116, die wie die Antriebseinheit 16 zumindest einen Antriebsmotor und eine Leistungsversorgungseinheit umfasst, ist Bestandteil einer elektrodynamischen Bremse 124, die weitestgehend, insbesondere vollständig identisch zur elektrodynamischen Bremse 24 ausgebildet ist. Es wird daher, um unnötige Wiederholungen zu vermeiden auf die Beschreibung oben zur elektrodynamischen Bremse 24 verwiesen.

Die elektrodynamische Bremse 124, die unten als "zweite elektrodynamische Bremse 124" bezeichnet wird, weist den Antriebsmotor der Antriebseinheit 116 und eine Bremsregelungseinheit 122 auf. Diese umfasst die Leistungsversorgungseinheit der Antriebseinheit 116 und zwei Bremssteuereinheiten 128, 130, die jeweils dazu vorgesehen sind, in einem aktiven Zustand diese Leistungsversorgungseinheit für einen Bremsvorgang der elektrodynamischen Bremse 124 zu steuern. Die Bremsregelungseinheit 122 weist eine Schalteinheit 132 mit Aktuator 133 auf, die die gleiche Funktion wie die Schalteinheit 32 in der ersten elektrodynamischen Bremse 24 hat: Sie ist dazu vorgesehen, zur Durchführung der jeweiligen Rückfallmaßnahme zwischen dem ersten Bremsmodus der Bremsregelungseinheit 122, in welchem die erste Bremssteuereinheit 128 die Leistungsversorgungseinheit der Antriebseinheit 116 zur Bereitstellung einer Bremswirkung steuert, und einem zweiten Bremsmodus der Bremsregelungseinheit 122 umzuschalten, in welchem die zweite Bremssteuereinheit 130 diese Leistungsversorgungseinheit zur Bereitstellung einer Bremswirkung steuert.

Außerdem sind die mechanische Bremseinrichtung 17, welche der ersten elektrodynamischen Bremse 24 zugeordnet ist, und die weitere, der zweiten elektrodynamischen Bremse 124 zugeordnete mechanische Bremseinrichtung 117 dargestellt.

Die oben, anhand der Figur 2 beschriebene Überwachung der ersten elektrodynamischen Bremse 24 erfolgt im betrachteten Ausführungsbeispiel zumindest mittels der Bremsregelungseinheit 122 der zweiten elektrodynamischen Bremse 124. Hiermit ist die der ersten Bremse 24 zugeordnete Bremsüberwachungseinrichtung 53 zumindest von der Bremsregelungseinheit 122 der zweiten Bremse 124 gebildet.

Die in Figur 2 dargestellte Bremsüberwachungseinrichtung 53 ist von den Bremssteuereinheiten 128, 130 der Bremsregelungseinheit 122 der zweiten Bremse 124 sowie von einer weiteren, von diesen getrennten Überwachungseinheit 56 gebildet.

Die Bremsüberwachungseinrichtung 53 ist mit einer ersten Überwachungsfunktion ausgestattet, insbesondere programmiert, bei welcher diese Bremsüberwachungseinrichtung 53 - neben den oben beschriebenen Steueraufgaben der Bremssteuereinheiten 128, 130 zur Steuerung der Leistungsversorgungseinheit der Antriebseinheit 116 - als erste Bremswirkungsüberwachungseinheit 50 ausgebildet ist, die dazu vorgesehen ist, die erste Bremse 24 in deren erstem Bremsmodus zu überwachen.

Diese Überwachungsfunktion basiert auf einer im Folgenden beschriebenen Überwachungsaufgabe, die von jeder der Bremssteuereinheiten 128, 130 und der Überwachungseinheit 56 parallel und weitestgehend, insbesondere vollständig unabhängig erledigt wird. Diese Einheiten stehen jeweils in Wirkverbindung mit einer Sensoreinheit 58, die zur Erfassung bzw. Bestimmung einer ersten Bremswirkungskenngröße B1 für den ersten Bremsmodus der ersten elektrodynamischen Bremse 24 vorgesehen ist.

Die Bremswirkungskenngröße B1 kann insbesondere eine Bremsmomentkenngröße sein, wobei die Sensoreinheit 58 z.B. mit einer vom Antriebsmotor 18 antreibbaren Achse 14 mechanisch gekoppelt und beispielsweise als Drehmomentsensor ausgebildet sein kann. Die Sensoreinheit 58 ist schematisch dargestellt und kann aus einem oder mehreren Sensoren bestehen, wobei die Sensoreinheit 58 die Bremswirkungskenngröße B1 aus einer bzw. mehreren gemessenen Größen bereitstellt.

In einer weiteren Ausführung können durch die Sensoreinheit 58 mehrere Bremswirkungskenngrößen erfasst werden, die sich in ihrer Art voneinander unterscheiden und jeweils durch eine unterschiedliche Einheit der Bremsüberwachungseinrichtung 53 ausgewertet werden, wie unten näher beschrieben.

Wie oben bereits beschrieben basieren die Bremssteuereinheiten 28, 30 der ersten Bremse 24 auf unterschiedlichen Technologien. Dies gilt entsprechend für die Bremssteuereinheiten 128, 130. Unter einer Technologie wird die konstruktive - oder hardwaretechnische - und/oder die algorithmische - oder softwaretechnische - Ausführung erfasst. In einer beispielhaften Konfiguration kann die erste Bremssteuereinheit 128 in der Form eines Signalprozessors (auch "SIP" genannt) ausgebildet sein, wobei die algorithmische Implementierung einer feldorientierten Regelung entspricht. Die zweite Bremssteuereinheit 130 kann als Field Programmable Gate Array (FPGA) oder "im Feld programmierbare Gatter-Anordnung" ausgebildet sein, wobei die algorithmische Implementierung einer schaltorientierten Regelung entspricht.

Gemäß einer alternativen Ausführung ist die zweite Bremssteuereinheit 130 derart ausgeführt, dass die Ansteuerung der Leistungsversorgungseinheit der Antriebseinheit 116 ausschließlich durch eine mittels Hardware realisierte Funktionalität - ohne Softwareeinsatz - erfolgt, während die erste Bremssteuereinheit 128 auf einer hardwaretechnischen und softwaretechnischen Implementierung der Steuerfunktionen basiert.

Basieren beide Bremssteuereinheiten 128, 130 auf einer softwaretechnischen Umsetzung im Hinblick auf zumindest eine Steuerfunktion, ist die entsprechende Software in den Bremssteuereinheiten 128, 130 unterschiedlich implementiert. Hierbei unterscheiden sich insbesondere die zum Ausführen der Steuerfunktion vorgesehenen Programmiercodes, indem die Codes z.B. durch verschiedene Personen und/oder verschiedenen Werkzeuge erstellt werden.

Aufgrund dieser Unterschiede, welche für die Steuerfunktion der Bremssteuereinheiten im jeweiligen Bremsmodus gelten, kann jede der Bremssteuereinheiten 128, 130 die Bremswirkung der ersten Bremse 24 in deren erstem Bremsmodus jeweils nach einer individuellen Methode überwachen, die sich von den Methoden der anderen Bremssteuereinheit unterscheidet. Die Bremssteuereinheiten 128, 130 der Bremsregelungseinheit 122 der zweiten Bremse 124 entsprechen demnach bei der Ausführung von Überwachungsfunktionen zwei Überwachungsvorrichtungen 127, 129 der Bremsüberwachungseinrichtung 53, die sich durch die oben beschriebenen Merkmale voneinander unterscheiden. Insbesondere unterscheiden sie sich bezüglich ihrer konstruktiven und/oder algorithmischen Ausführung voneinander. Wenn sie jeweils eine Software für die Ausführung von Überwachungsfunktionen aufweist, sind diese Software unterschiedlich implementiert.

Die Überwachungseinheit 56 basiert auf einer Technologie, die sich von den Technologien der Bremssteuereinheiten 128, 130 bzw. der Überwachungsvorrichtungen 127, 129 unterscheidet. Beispielsweise kann die Überwachungseinheit 56 auf der CPLD-Technologie basieren ("Complex Programmable Logic Device"). Die Überwachung der durch die erste Bremse 24 erzeugten Bremswirkung kann demnach gemäß einer Methode erfolgen, die sich von den Methoden der Bremssteuereinheiten 128, 130 bzw. Überwachungsvorrichtungen 127, 129 unterscheidet.

Die von jeder Bremssteuereinheit 128, 130 und von der Überwachungseinheit 56 zu erledigende Überwachungsaufgabe besteht darin, auf der Grundlage der Bremswirkungskenngröße B1 zu bestimmen, ob die durch die erste Bremse 24 in deren erstem Bremsmodus erzeugte Bremswirkung ausreichend ist. Aufgrund der unterschiedlichen Technologien ist im betrachteten Ausführungsbeispiel der Überwachungsmechanismus, mit welchem die Bremssteuereinheiten 128, 130 und die Überwachungseinheit 56 zur Ausführung der ersten Überwachungsfunktion ausgestattet sind, jeweils auf eine andere Art realisiert bzw. bei jeder dieser Einheiten unterschiedlich. Insbesondere können die unterschiedlichen Überwachungsmechanismen durch unterschiedliche Überwachungssoftware realisiert sein. Die Überwachungsaufgabe wird daher jeweils mittels einer unterschiedlichen Methode d.h. mittels einer unterschiedlichen Implementierung der Aufgabe durch diese Einheiten weitestgehend getrennt, insbesondere vollständig getrennt erledigt.

Wie oben bereits erwähnt können in einer besonderen Ausführung durch die Sensoreinheit 58 mehrere Bremswirkungskenngrößen erfasst werden, die sich in ihrer Art voneinander unterscheiden und jeweils durch eine unterschiedliche Einheit der Bremsüberwachungseinrichtung 53 ausgewertet wird. Die Art der Bewegungskenngrößen wird hierbei durch die Technologie der jeweiligen Einheit der Bremsüberwachungseinrichtung 53 bestimmt.

Die Bremssteuereinheiten 128, 130 der zweiten Bremse 124, d.h. die Überwachungsvorrichtungen 127, 129 und die Überwachungseinheit 56 sind jeweils dazu vorgesehen, bei der Erledigung dieser Überwachungsaufgabe abhängig von der ersten Bremswirkungskenngröße B1 bzw. von der jeweiligen Bremswirkungskenngröße ein Fehlersignal auszugeben. Dieses wird von jeder dieser Einheiten ausgegeben, wenn die Auswertung der Bremswirkungskenngröße B1 bzw. der jeweiligen Bremswirkungskenngröße durch die jeweilige Einheit zum Ergebnis führt, dass eine unzureichende Bremswirkung der ersten Bremse 24 in deren erstem Bremsmodus als erkannt gilt. Aufgrund der unterschiedlichen Implementierung der Überwachungsaufgabe in jeder der genannten Einheiten kann eine weitestgehend unabhängige, insbesondere vollständig unabhängige Ausgabe eines Fehlersignals durch die Einheiten der Bremsüberwachungseinrichtung 53 erfolgen.

Die Betätigung der Schalteinheit 32 wie oben beschrieben erfolgt nur dann, wenn zumindest zwei Fehlersignale ausgegeben werden. Hierzu dient eine Auslöseeinheit 60, welche als Bestandteil der ersten Bremsüberwachungseinrichtung 53 mit einem Ausgang der Bremssteuereinheiten 128, 130 (oder Überwachungsvorrichtungen 127, 129) und der Überwachungseinheit 56 einerseits und mit der Schalteinheit 32, insbesondere mit dem Aktuator 33 andererseits in Wirkverbindung steht. Die Auslöseeinheit 60 (auch "Voter"-Vorrichtung genannt) weist drei zueinander parallel geschaltete Leitungen auf, die mit einer gemeinsamen Spannungsquelle 62 und gemeinsam mit dem Aktuator 33 elektrisch verbindbar sind. In jeder Leitung sind jeweils zwei Schalter angeordnet, wobei sich die Schalter während der Erledigung der Überwachungsaufgabe durch die Bremssteuereinheiten 128, 130 und die Überwachungseinheit 56 - und demnach im ersten Bremsmodus der ersten Bremse 24 - in einer geöffneten Stellung befinden. Hierdurch ist eine elektrische Verbindung zwischen der Spannungsquelle 62 und dem Aktuator 33 getrennt. Diese elektrische Verbindung kann durch Schließen beider Schalter in zumindest einer Leitung hergestellt werden, wodurch die Schalteinheit 32 betätigt wird. Die Schalter werden jeweils mittels eines Fehlersignals geschlossen, welches am Ausgang einer Einheit der Bremsüberwachungseinrichtung 53 vorliegt. In jeder Leitung stehen die Schalter jeweils in Wirkverbindung mit einer unterschiedlichen Einheit dieser, sodass ein Schließen beider Schalter in dieser Leitung und daher die Betätigung der Schalteinheit 32 nur dann erfolgen, wenn ein Fehlersignal von zwei unterschiedlichen Einheiten der Bremsüberwachungseinrichtung 53 ausgegeben wird.

Die Überwachungsaufgabe, nämlich die individuelle Auswertung der Bremswirkungskenngröße B1 bzw. der jeweiligen Bremswirkungskenngröße durch die Bremssteuereinheiten 128, 130 und die Überwachungseinheit 56 wird wie oben beschrieben von diesen Einheiten weitestgehend unabhängig voneinander erledigt. Die Überwachungsfunktion umfasst diese Überwachungsaufgabe und wird mit der Betätigung der Schalteinheit 32 durch ein Zusammenwirken der Einheiten der Bremsüberwachungseinrichtung 53, d.h. der Überwachungsvorrichtungen 127, 129 und der Überwachungseinheit 56, insbesondere durch eine Kombination der Ergebnisse der individuellen Überwachungsaufgaben, erledigt.

Mit der Betätigung der Schalteinheit 32 wird bei unzureichender Bremswirkung der ersten elektrodynamischen Bremse 24 in deren erstem Bremsmodus eine Rückfallmaßnahme eingeleitet, die der weiter oben beschriebenen Übernahme der Steuerung der Leistungsversorgungseinheit 20 durch die zweite Bremssteuereinheit 30 entspricht.

Die Bremsüberwachungseinrichtung 53 ist mit einer zweiten Überwachungsfunktion ausgestattet, insbesondere programmiert, bei welcher sie - neben den oben beschriebenen Steueraufgaben der Bremssteuereinheiten 128, 130 zur Steuerung der Leistungsversorgungseinheit der Antriebseinheit 116 - als zweite Bremswirkungsüberwachungseinheit 52 ausgebildet ist (siehe Figur 2), die dazu vorgesehen ist, die erste Bremse 24 in deren zweitem Bremsmodus zu überwachen.

Diese zweite Überwachungsfunktion basiert auf einer Überwachungsaufgabe, die von jeder der Bremssteuereinheiten 128, 130 und der Überwachungseinheit 56 weitestgehend getrennt erledigt wird und identisch zur Überwachungsaufgabe der ersten Überwachungsfunktion ist. Die zweite Überwachungsfunktion unterscheidet sich von der ersten Überwachungsfunktion durch den Einsatz einer weiteren Auslöseeinheit 64, welche als Bestandteil der Bremsüberwachungseinrichtung 53 mit einem Ausgang der Bremssteuereinheiten 128, 130 bzw. der Überwachungseinheit 56 einerseits und mit der Schaltvorrichtung 54 (siehe auch Figur 2), insbesondere mit deren Aktuator 55 in Wirkverbindung steht. Die Auslöseeinheit 64 (auch "Voter"-Vorrichtung genannt) weist drei in Reihe geschaltete Paare von parallelen Leitungen auf, die mit der gemeinsamen Spannungsquelle 62 und gemeinsam mit dem Aktuator 55 elektrisch verbindbar sind. Für jedes Leitungspaar ist in beiden Leitungen jeweils ein Schalter angeordnet, wobei sich die Schalter während der Erledigung der Überwachungsaufgabe durch die Bremssteuereinheiten 128, 130 und die Überwachungseinheit 56 - und demnach während des zweiten Bremsmodus der ersten Bremse 24 - in einer geschlossenen Stellung befinden. Hierdurch ist eine elektrische Verbindung zwischen der Spannungsquelle 62 und dem Aktuator 55 hergestellt. Diese elektrische Verbindung kann durch Öffnung beider Schalter in zumindest einem Leitungspaar unterbrochen werden, wodurch die Schalteinheit 54 betätigt wird.

Die Schalter werden jeweils mittels eines Fehlersignals geöffnet, welches am Ausgang einer Einheit der Bremsüberwachungseinrichtung 53 vorliegt. In jedem Leitungspaar stehen die Schalter jeweils in Wirkverbindung mit einer unterschiedlichen Einheit dieser, sodass ein Öffnung beider Schalter in diesem Leitungspaar und daher die Betätigung der Schaltvorrichtung 54 nur dann erfolgen, wenn ein Fehlersignal von zwei unterschiedlichen Einheiten der Bremsüberwachungseinrichtung 53 ausgegeben wird.

Während des zweiten Bremsmodus der ersten Bremse 24 befindet sich die Schalteinheit 54 in einer geschlossenen Stellung, wodurch eine elektrische Verbindung zwischen einer Spannungsquelle 66 und der Bremseinrichtung 17 hergestellt ist. Hierbei ist ein Signal "Lösen der Bremseinrichtung 17" gesetzt. Wird die Schalteinheit 54 betätigt, wird diese elektrische Verbindung getrennt, wodurch ein Signal "Anlegen der Bremseinrichtung 17" erzeugt wird.

In der Figur ist außerdem eine Steuerleitung 67 dargestellt, durch welche die Bremseinrichtung 17 jederzeit mittels eines Befehls des Fahrzeugsführers betätigt werden kann.

Die Überwachungsaufgabe, nämlich die individuelle Auswertung der Bremswirkungskenngröße B1 bzw. der jeweiligen Bremswirkungskenngröße durch die Bremssteuereinheiten 128, 130 sowie von der Überwachungseinheit 56 wird wie oben beschrieben von diesen Einheiten weitestgehend unabhängig voneinander erledigt. Die Überwachungsfunktion umfasst diese Überwachungsaufgabe und wird mit der Betätigung der Schalteinheit 54 durch ein Zusammenwirken dieser Einheiten, insbesondere durch eine Kombination der Ergebnisse der individuellen Überwachungsaufgaben, erledigt.

Mit der Betätigung der Schaltvorrichtung 54 wird bei unzureichender Bremswirkung der ersten elektrodynamischen Bremse 24 in deren zweitem Bremsmodus eine Rückfallmaßnahme eingeleitet, die der weiter oben beschriebenen Betätigung der mechanischen Bremse 17 entspricht. Der zweite Bremsmodus soll weiterhin wirken, bis der Bremsvorgang zu Ende ist.

Bei der Ausführung des ersten Bremsmodus, bei welchem die erste Überwachungsfunktion mittels der Auslöseeinheit 60 erledigt werden kann, ist die für die zweite Überwachungsfunktion vorgesehene Auslöseeinheit 64 inaktiv, indem eine permanente, von der Konfiguration der Auslöseeinheit 64 unabhängige elektrische Verbindung zwischen der Spannungsquelle 62 und dem Aktuator 55 hergestellt ist. Diese elektrische Verbindung wird beim Übergang in den zweiten Bremsmodus durch einen Schalter 68 unterbrochen, welcher bei der Betätigung der Schalteinheit 32 durch den Aktuator 33 geöffnet wird. Die elektrische Verbindung bleibt dann nur noch über die Auslöseeinheit 64 bestehen, die daher in einen aktiven Zustand versetzt wird.

Bei der Ausführung des zweiten Bremsmodus, bei welchem die zweite Überwachungsfunktion mittels der Auslöseeinheit 64 erledigt werden kann, ist die für die erste Überwachungsfunktion vorgesehene Auslöseeinheit 60 inaktiv, indem eine permanente, von der Konfiguration der Auslöseeinheit 60 unabhängige elektrische Verbindung zwischen einer Spannungsquelle 70 und dem Aktuator 33 hergestellt ist. Für die Schalteinheit 32 ist außerdem eine Rückstelleinheit 72 vorgesehen, die dazu dient, die erste Bremssteuereinheit 28 nach Ende des zweiten Bremsmodus bzw. nach Beendigung eines Bremsvorgangs mittels der Bremseinrichtung 17 wieder in Betrieb zu nehmen. Dies erfolgt mittels eines Signals S, welches einen Aktuator 74 betätigt, durch den ein Schalter 76 die elektrische Verbindung des Aktuators 33 mit der Spannungsquelle 70 trennt. Mit dieser Trennung erfolgt eine Aktivierung des Aktuators 33, welcher folgende Schaltvorgänge ausführt: Die Schalteinheit 32 wird zurückgestellt, sodass die Bremssteuereinheit 28 wieder mit der Leistungsversorgungseinheit 20 wirksam verbunden wird; Der Schalter 68 wird betätigt, sodass eine elektrische Verbindung der Spannungsquelle 62 mit dem Aktuator 55 hergestellt und dadurch die Auslöseeinheit 64 deaktiviert werden; Ein Schalter 78 trennt eine elektrische Verbindung zwischen einer Spannungsquelle 80 und dem Aktuator 74, sodass die Rückstelleinheit 72 deaktiviert wird bzw. keine Betätigung des Schalters 76 durch den Aktuator 74 mittels des Signals S erfolgen kann. Eine Betätigung des Schalters 78 zur Aktivierung der Rückstelleinheit 72 setzt eine Beendigung des Zustands, der zum Ansprechen der Überwachung geführt hat, voraus.

Die erste und zweite Überwachungsfunktionen, die von der Bremsüberwachungseinrichtung 53 durchgeführt werden, gehören zu einem ersten Überwachungsmodus der Bremsvorrichtung des Schienenfahrzeugs 10, in welchem die erste Bremse 24 überwacht wird. Dabei wird eine Überwachungsrolle für die Einleitung einer der oben beschriebenen Rückfallmaßnahmen betreffend die erste Bremse 24 von der zweiten Bremse 124, insbesondere von deren Bremsregelungseinheit 122 angenommen.

Die Bremsvorrichtung des Schienenfahrzeugs 10 ist mit einem zweiten Überwachungsmodus vorgesehen, in welchem die zweite Bremse 124 überwacht wird. Im betrachteten Ausführungsbeispiel wird eine Überwachungsrolle für die Einleitung einer der oben beschriebenen Rückfallmaßnahmen betreffend die zweite Bremse 124 von der ersten Bremse 24, insbesondere von deren Bremsregelungseinheit 22 angenommen. Die Bremsregelungseinheit 22 der ersten Bremse 24 bildet zusammen mit der Überwachungseinheit 56 eine zweite Bremsüberwachungseinrichtung 153, die dazu vorgesehen ist, eine Bremswirkungskenngröße B2 für die Einleitung einer Rückfallmaßnahme betreffend die zweite Bremse 124 zu berücksichtigen. Die Bremsüberwachungseinrichtung 153 ist wie die Bremsüberwachungseinrichtung 53 mit zwei Überwachungsfunktionen ausgestattet, welche jeweils zur Überwachung der zweiten Bremse 124 bei der Ausführung von deren erstem Bremsmodus bzw. zweitem Bremsmodus vorgesehen sind. Die Bremssteuereinheiten 28, 30 sind bei der Ausführung der Überwachungsfunktionen als Überwachungsvorrichtungen 27, 29 der Bremsüberwachungseinrichtung 153 ausgebildet. Bei der Ausführung der ersten Überwachungsfunktion und der zweiten Überwachungsfunktion ist die Bremsüberwachungseinrichtung 153 als Bremswirkungsüberwachungseinheit 150 bzw. 152 für den ersten bzw. zweiten Bremsmodus der Bremsregelungseinheit 122 der zweiten Bremse 124 ausgebildet. Diese Überwachung erfolgt abhängig von einer zweiten Bremswirkungskenngröße B2 oder von mehreren, in ihrer Art voneinander unterschiedlichen Bremswirkungskenngrößen, welche von einer Sensoreinheit 158 erfasst wird bzw. werden. Die obige Beschreibung zur Sensoreinheit 58 gilt entsprechend für die Sensoreinheit 158.

In einer besonderen Ausführung können die Sensoreinheiten 58 und 158 bezüglich einer Hardware zumindest teilweise von einer gleichen Sensorstruktur gebildet sein.

Der Übersichtlichkeit halber ist in Figur 3 lediglich die Überwachung der ersten Bremse 24 durch die zweite Bremse 124 dargestellt. Die obige Beschreibung der von der Bremsüberwachungseinrichtung 53 durchgeführten Überwachungsfunktionen findet für die erste Bremse 24 bezüglich der Überwachung der zweiten Bremse 124 entsprechende Anwendung. Dabei werden die entsprechenden Überwachungsfunktionen durch die Bremssteuereinheiten 28, 30 in deren Funktion als Überwachungsvorrichtungen 27, 29 im Zusammenwirken mit der Überwachungseinheit 56 durchgeführt.

Die Überwachungseinheit 56 ist im betrachteten Ausführungsbeispiel gemeinsamer Bestandteil der ersten Bremsüberwachungseinrichtung 53 und der zweiten Bremsüberwachungseinrichtung 153.

Die Ausführung der Überwachungsfunktionen kann in den Bremssteuereinheiten 28, 30, 128, 130 in deren Funktion als Überwachungsvorrichtungen 27, 29, 127, 129 jeweils mittels einer Recheneinheit erfolgen, die identisch zu oder unterschiedlich von der Recheneinheit ausgebildet ist, die zur Ausführung eines Bremsmodus vorgesehen ist.

Mit der Schnittstelle zur Fahrzeugnotbremsleitung 42 kann eine Notbremsung mittels der elektrodynamischen Bremsen 24, 124 ausgelöst werden. Mit dem Sicherheitsniveau, welches durch die vorgeschlagene Ausbildung der Schienenfahrzeugbremsvorrichtung, insbesondere bei einer Ausbildung der Bremsregelungseinheiten mit zumindest zwei Bremssteuereinheiten, erreichbar ist, kann ein Schienenfahrzeug mit einer Notbremseeinrichtung bereitgestellt werden, wobei eine Notbremsung ausschließlich mittels der elektrodynamischen Bremsen mit einem ausreichenden Sicherheitsniveau erfolgen kann. Hierdurch kann auf eine vollwertige, zusätzliche Reibungsbremse vorteilhaft verzichtet werden. Für geringere Geschwindigkeiten kann als Reibungsbremse lediglich eine Feststellbremse, beispielsweise in Form einer Federspeicherbremse, erhalten bleiben, die durch eine mittels eines Federspeichers erzeugte Reibkraft ein Wegrollen des abgestellten Fahrzeugs am Hang verhindert. Damit kann eine deutliche Verringerung der Kosten von Bremskomponenten und des Gewichts des Schienenfahrzeugs erzielt werden.

In der in Figur 3 gezeigten Ausführung können die Antriebseinheiten 16 und 116 einem gleichen Drehgestell des Schienenfahrzeugs 10 oder separaten Drehgestellen zugeordnet sein. In der in Figur 1 gezeigten Ausführung sind die Antriebseinheiten 16, 116 jeweils einem unterschiedlichen Drehgestell zugeordnet. Hierbei werden die Antriebsachsen 14 eines gleichen Drehgestells jeweils durch einen eigenen Antriebsmotor angetrieben, wobei beide Antriebsmotoren durch die gleiche Leistungsversorgungseinheit versorgt werden. Bei der in Figur 3 gezeigten Bremsvorrichtung sind dann in dieser Ausführung die elektrodynamischen Bremsen 24, 124 jeweils unterschiedlichen Drehgestellen und daher mehreren Antriebsachsen zugeordnet. Durch die Bremsüberwachungseinrichtungen 53, 153 kann demnach eine drehgestellweise Lokalisierung eines Bremswirkungsverlusts erreicht werden und es kann eine Rückfallmaßnahme in Bezug auf das jeweilige Drehgestell differenziert eingeleitet werden.

In einer alternativen Ausführung ist für jede angetriebene Achse eines Drehgestells ein Antriebsmotor vorgesehen, wobei für jeden Antriebsmotor dieses Drehgestells jeweils eine unterschiedliche Leistungsversorgungseinheit vorgesehen ist. In dieser Ausführung ist demnach jeder angetriebenen Achse des Drehgestells jeweils eine separate elektrodynamische Bremse zugeordnet. Bei der in Figur 3 gezeigten Bremsvorrichtung sind dann in dieser Ausführung die elektrodynamischen Bremsen 24, 124 einem gleichen Drehgestell bzw. jeweils einer unterschiedlichen Antriebsachse in diesem Drehgestell zugeordnet. Durch die Bremsüberwachungseinrichtungen 53, 153 kann demnach eine achsenweise Lokalisierung eines Bremswirkungsverlusts erreicht werden und es kann eine Rückfallmaßnahme in Bezug auf die jeweilige Antriebsachse differenziert eingeleitet werden.

## Patentansprüche

1. Schienenfahrzeugbremsvorrichtung mit zumindest einer elektrodynamischen Bremse (24), die eine Antriebseinheit (16) umfasst, welche zumindest einen Antriebsmotor (18) und eine Leistungsversorgungseinheit (20) zum Versorgen des Antriebsmotors (18) in einem Traktionsmodus der Antriebseinheit (16) aufweist,
**gekennzeichnet durch**
zumindest zwei Bremssteuereinheiten (28, 30), wobei in einem ersten Bremsmodus eine erste Bremssteuereinheit (28) in einem aktiven Zustand die Leistungsversorgungseinheit (20) zur Bereitstellung einer Bremswirkung steuert, eine erste Bremswirkungsüberwachungseinheit (50) und eine Schalteinheit (32),
die dazu dient, abhängig von einer Bremswirkungskenngröße im ersten Bremsmodus in einen zweiten Bremsmodus umzuschalten,
in welchem die zweite Bremssteuereinheit (30) in einem aktiven Zustand die Leistungsversorgungseinheit (20) zur Bereitstellung einer Bremswirkung steuert.

2. Schienenfahrzeugbremsvorrichtung nach Anspruch 1
**dadurch gekennzeichnet, dass**
sich die erste Bremsteuereinheit (28) im zweiten Bremsmodus in einem inaktiven Zustand befindet.

3. Schienenfahrzeugbremsvorrichtung nach Anspruch 1 oder 2,
**dadurch gekennzeichnet, dass**
die erste Bremswirkungsüberwachungseinheit (50) zum Überwachen der ersten Bremssteuereinheit (28) dient, und dass zumindest eine zweite Bremswirkungsüberwachungseinheit (52) zum Überwachen zumindest der zweiten Bremssteuereinheit (30) vorgesehen ist.

4. Schienenfahrzeugbremsvorrichtung nach Anspruch 3, **gekennzeichnet durch**
eine weitere Bremseinrichtung (17) und eine Schaltvorrichtung (54), wobei abhängig von einer Bremswirkungskenngröße im zweiten Bremsmodus diese weitere Bremseinrichtung (17) mittels der Schaltvorrichtung (54) betätigt wird.

5. Schienenfahrzeugbremsvorrichtung nach Anspruch 4,
**dadurch gekennzeichnet, dass**
die Bremseinrichtung (17) als Feststellbremse ausgebildet ist.

6. Schienenfahrzeugbremsvorrichtung nach einem der vorhergehenden Ansprüche,
**dadurch gekennzeichnet, dass**
sich die Bremssteuereinheiten (28, 30) bezüglich ihrer konstruktiven und/oder algorithmischen Ausführung voneinander unterscheiden.

7. Schienenfahrzeugbremsvorrichtung nach Anspruch 6,
**dadurch gekennzeichnet, dass**
eine Software für die Ausführung zumindest einer Steuerfunktion in der zweiten Bremssteuereinheit (30) unterschiedlich implementiert ist als in der ersten Bremssteuereinheit (28).

8. Schienenfahrzeugbremsvorrichtung nach Anspruch 6,
**dadurch gekennzeichnet, dass**
eine der Bremssteuereinheiten als eine reine hardwaretechnische Steuerung ausgebildet ist.

9. Schienenfahrzeugbremsvorrichtung nach einem der vorhergehenden Ansprüche,
**gekennzeichnet durch**
einen Testmodus, in welchem die Schalteinheit (32) getestet wird.

10. Schienenfahrzeugbremsvorrichtung nach einem der vorhergehenden Ansprüche,
**gekennzeichnet durch**
eine Schnittstelle (41) zu einer Fahrzeugsnotbremseleitung (42), mittels welcher eine Notbremsung mittels der elektrodynamischen Bremse (24) auslösbar ist.

11. Schienenfahrzeugbremsvorrichtung nach einem der vorhergehenden Ansprüche,
**gekennzeichnet durch**
zumindest eine zweite elektrodynamische Bremse (124), die eine Antriebseinheit (116), welche zumindest einen Antriebsmotor und eine Leistungsversorgungseinheit zum Versorgen des Antriebsmotors in einem Traktionsmodus der Antriebseinheit (116) aufweist, und zumindest eine Bremsregelungseinheit (122) umfasst, welche die jeweilige Leistungsversorgungseinheit und zumindest eine Bremssteuereinheit (128, 130) aufweist, die in einem ersten Bremsmodus die jeweilige Leistungsversorgungseinheit zur Bereitstellung einer Bremswirkung steuert, wobei die Bremssteuereinheiten (28, 30) zumindest Bestandteile einer der zweiten Bremse (124) zugeordneten Bremsüberwachungseinrichtung (153) sind.

12. Schienenfahrzeugbremsvorrichtung nach Anspruch 11,
**dadurch gekennzeichnet, dass**
zumindest die Bremsregelungseinheit (122) der zweiten Bremse (124) eine der ersten Bremse (24) zugeordnete Bremsüberwachungseinrichtung (53) bildet.

13. Verfahren zum Bremsen eines Schienenfahrzeugs (10) mittels einer elektrodynamischen Bremse (24), die eine Antriebseinheit (16) umfasst, welche zumindest einen Antriebsmotor (18) und eine Leistungsversorgungseinheit (20) zum Versorgen des Antriebsmotors (18) in einem Traktionsmodus der Antriebseinheit (16) aufweist, bei welchem
- in einem ersten Bremsmodus die Leistungsversorgungseinheit (20) zur Bereitstellung einer Bremswirkung durch eine erste Bremssteuereinheit (28) gesteuert wird;
- eine Bremswirkungskenngröße im ersten Bremsmodus erfasst wird;
- abhängig von der Bremswirkungskenngröße in einen zweiten Bremsmodus umgeschaltet wird, in welchem eine zweite Bremssteuereinheit (30) die Leistungsversorgungseinheit (20) zur Bereitstellung einer Bremswirkung steuert.

14. Verfahren nach Anspruch 13,
**dadurch gekennzeichnet, dass**
- eine Bremswirkungskenngröße im zweiten Bremsmodus erfasst wird;
- abhängig von der Bremswirkungskenngröße im zweiten Bremsmodus eine weitere Bremseinrichtung (17) mittels einer Schaltvorrichtung (54) betätigt wird.

## Claims

1. Rail vehicle braking device comprising at least one electrodynamic brake (24), which comprises a drive unit (16), which has at least one drive motor (18) and a power supply unit (20) for suppyling power to the drive motor (18) in a traction mode of the drive unit (16),
**characterized by**
at least two braking control units (28, 30), wherein, in a first braking mode, a first braking control unit (28), in an active state, controls the power supply unit (20) so as to provide a braking effect, a first braking effect monitoring unit (50) and a switching unit (32), which is used, in the first braking mode, to switch over to a second braking mode depending on a braking effect characteristic quantity, in which second braking mode the second braking control unit (30), in an active state, controls the power supply unit (20) so as to provide a braking effect.

2. Rail vehicle braking device according to Claim 1,
**characterized in that**
the first braking control unit (28) is in an inactive state in the second braking mode.

3. Rail vehicle braking device according to Claim 1 or 2,
**characterized in that**
the first braking effect monitoring unit (50) is used for monitoring the first braking control unit (28), and **in that** at least one second braking effect monitoring unit (52) is provided for monitoring at least the second braking control unit (30).

4. Rail vehicle braking device according to Claim 3,
**characterized by**
a further braking apparatus (17) and a switching device (54), wherein, in the second braking mode, this further braking apparatus (17) is actuated by means of the switching device (54) depending on a braking effect characteristic quantity.

5. Rail vehicle braking device according to Claim 4,
**characterized in that**
the braking apparatus (17) is in the form of a parking brake.

6. Rail vehicle braking device according to one of the preceding claims,
**characterized in that**
the braking control units (28, 30) differ from one another with respect to their structural and/or algorithmic design.

7. Rail vehicle braking device according to Claim 6,
**characterized in that**
software for executing at least one control function is implemented differently in the second braking control unit (30) than in the first braking control unit (28).

8. Rail vehicle braking device according to Claim 6,
**characterized in that**
one of the braking control units is in the form of a purely hardware-based control.

9. Rail vehicle braking device according to one of the preceding claims,
**characterized by**
a test mode, in which the switching unit (32) is tested.

10. Rail vehicle braking device according to one of the preceding claims,
**characterized by**
an interface (41) to a vehicle emergency brake line (42), by means of which emergency braking by means of the electrodynamic brake (24) can be initiated.

11. Rail vehicle braking device according to one of the preceding claims,
**characterized by**
at least one second electrodynamic brake (124), which comprises a drive unit (116), which has a least one drive motor and a power supply unit for supplying power to the drive motor in a traction mode of the drive unit (116), and at least one braking regulation unit (122), which has the respective power supply unit and at least one braking control unit (128, 130), which, in a first braking mode, controls the respective power supply unit so as to provide a braking effect, wherein the braking control units (28, 30) are at least component parts of a braking monitoring apparatus (153) assigned to the second brake (124).

12. Rail vehicle braking device according to Claim 11, **characterized in that**
at least the braking regulation unit (122) of the second brake (124) forms a braking monitoring apparatus (53) assigned to the first brake (24).

13. Method for braking a rail vehicle (10) by means of an electrodynamic brake (24), which comprises a drive unit (16), which has at least one drive motor (18) and a power supply unit (20) for supplying power to the drive motor (18) in a traction mode of the drive unit (16), in which
- in a first operating mode, the power supply unit (20) is controlled by a first braking control unit (28) so as to provide a braking effect;
- a braking effect characteristic quantity is detected in the first braking mode;
- switchover to a second braking mode takes place depending on the braking effect characteristic quantity, in which second braking mode a second braking control unit (30) controls the power supply unit (20) so as to provide a braking effect.

14. Method according to Claim 13,
**characterized in that**
- a braking effect characteristic quantity is detected in the second braking mode;
- in the second braking mode, a further braking apparatus (17) is actuated by means of a switching apparatus (54) depending on the braking effect characteristic quantity.

## Revendications

1. Dispositif de freinage d'un véhicule ferroviaire ayant au moins un frein (24) électrodynamique, qui comprend une unité (16) d'entraînement, laquelle a au moins un moteur (18) d'entraînement et une unité (20) d'alimentation de puissance pour alimenter le moteur (18) d'entraînement dans un mode de traction de l'unité (16) d'entraînement, **caractérisé par**
au moins deux unités (28, 30) de commande de frein, dans lequel, dans un premier mode de freinage, une première unité (28) de commande de frein commande, dans un état actif, l'unité (20) d'alimentation de puissance pour mettre à disposition un effet de freinage, une première unité (50) de contrôle de l'effet de freinage et une unité (32) de commutation qui sert à passer, en fonction d'une grandeur caractéristique d'effet de freinage dans le premier mode de freinage, dans un deuxième mode de freinage, dans lequel la deuxième unité (30) de commande de frein commande, dans l'état actif, l'unité (20) d'alimentation de puissance pour la mise à disposition d'un effet de freinage.

2. Dispositif de freinage d'un véhicule ferroviaire suivant la revendication 1,
**caractérisé en ce que**
la première unité (28) de commande de frein se trouve dans un état inactif dans le deuxième mode de freinage.

3. Dispositif de freinage d'un véhicule ferroviaire suivant la revendication 1 ou 2,
**caractérisé en ce que**
la première unité (50) de contrôle de l'effet de freinage sert à contrôler la première unité (28) de commande de frein et **en ce qu'**il est prévu au moins une deuxième unité (52) de contrôle de l'effet de freinage pour contrôler au moins la deuxième unité (30) de commande de frein.

4. Dispositif de freinage d'un véhicule ferroviaire suivant la revendication 3,
**caractérisé par**
un autre dispositif (17) de freinage et par un dispositif (54) de commutation dans lequel, en fonction d'une grandeur caractéristique de l'effet de freinage dans le deuxième mode de freinage, cet autre dispositif (17) de freinage est actionné au moyen du dispositif (54) de commutation.

5. Dispositif de freinage d'un véhicule ferroviaire selon la revendication 4,
**caractérisé en ce que**
le dispositif (1) de freinage est constitué en frein de stationnement.

6. Dispositif de freinage d'un véhicule ferroviaire suivant l'une des revendications précédentes,
**caractérisé en ce que**
les unités (28, 30) de commande de frein diffèrent l'une de l'autre en ce qui concerne leur réalisation constructive et/ou algorithmique.

7. Dispositif de freinage d'un véhicule ferroviaire suivant la revendication 6,
**caractérisé en ce que**
un logiciel pour la réalisation d'au moins une fonction de commande dans la deuxième unité (30) de commande de frein est mis en oeuvre différemment dans la première unité (28) de commande de frein.

8. Dispositif de freinage d'un véhicule ferroviaire suivant la revendication 6,
**caractérisé en ce que**
l'une des unités de commande de frein est constituée sous la forme d'une commande purement matérielle.

9. Dispositif de freinage d'un véhicule ferroviaire suivant l'une des revendications précédentes,
**caractérisé par**
un mode de test, dans lequel l'unité (32) de commande est testée.

10. dispositif de freinage d'un véhicule ferroviaire suivant l'une des revendications précédentes,
**caractérisé par**
une interface (41) avec une ligne (42) de freinage d'urgence du véhicule, au moyen de laquelle un freinage d'urgence peut être déclenché à l'aide du frein (24) électrodynamique.

11. dispositif de freinage d'un véhicule ferroviaire suivant l'une des revendications précédentes,
**caractérisé par**
au moins un deuxième frein (124) électrodynamique qui a une unité (116) d'entraînement, qui comprend au moins un moteur d'entraînement et une unité d'alimentation de puissance pour alimenter le moteur d'entraînement dans un mode de traction de l'unité (116) d'entraînement, et au moins une unité (122) de régulation du freinage, qui a l'unité d'alimentation de puissance respective et au moins une unité (128, 130) de commande de frein, laquelle commande, dans un premier mode de freinage, l'unité d'alimentation de puissance respective pour la mise à disposition d'un effet de freinage, les unités (28, 30) de commande de frein faisant partie au moins de l'un des dispositifs (153) de commande de frein associés au deuxième frein (124).

12. dispositif de freinage d'un véhicule ferroviaire suivant la revendication 11,
**caractérisé en ce que**
au moins l'unité (122)de régulation du freinage du deuxième frein (124) forme un dispositif (53) de contrôle de frein associé au premier frein (24).

13. procédé de freinage d'un véhicule (10) ferroviaire au moyen d'un frein (24) électrodynamique, qui comprend une unité (16) d'entraînement, laquelle a au moins un moteur (18) d'entraînement et une unité (20) d'alimentation de puissance pour l'alimentation du moteur (18) d'entraînement dans un mode de traction de l'unité (16) d'entraînement dans lequel,
- dans un premier mode de freinage, on commande, par une première unité (28) de commande de frein, l'unité (20) d'alimentation de puissance pour la mise à disposition d'un effet de freinage,
- on détecte une grande caractéristique de l'effet de freinage dans le premier mode de freinage,
- en fonction de la grandeur caractéristique de l'effet de freinage, on passe à un deuxième mode de freinage, dans lequel une deuxième unité (30) de commande commande l'unité (20) d'alimentation de puissance pour la mise à disposition d'un effet de freinage.

14. procédé suivant la revendication 13,
**caractérisé en ce que**
- on détecte une grandeur caractéristique de l'effet de freinage dans un deuxième mode de freinage,
- en fonction de la grandeur caractéristique de l'effet de freinage dans le deuxième mode de freinage, on actionne un autre dispositif (17) de freinage à l'aide d'un dispositif (54) de commutation.
